**Europäisches Patentamt**

(19) **European Patent Office**

**Office européen des brevets**

(11) Veröffentlichungsnummer: **0 202 528**

**A2**

(12) # EUROPÄISCHE PATENTANMELDUNG

(21) Anmeldenummer: **86106123.2**

(51) Int. Cl.⁴: **F 16 H 27/06**

(22) Anmeldetag: **05.05.86**

(30) Priorität: **23.05.85 CH 2198/85**

(43) Veröffentlichungstag der Anmeldung:
**26.11.86 Patentblatt 86/48**

(84) Benannte Vertragsstaaten:
**CH DE FR GB IT LI NL**

(71) Anmelder: **Baumann & Cie. AG**
**Ferrachstrasse 31**
**CH-8630 Rüti(CH)**

(72) Erfinder: **Rüegg, Hans R.**
**Berghofweg 11**
**CH-8630 Rüti(CH)**

(72) Erfinder: **Gros, Paul**
**Mooswies**
**CH-8604 Bubikon(CH)**

(72) Erfinder: **Iten, Peter**
**Im Chramen 9**
**CH-8712 Stäfa(CH)**

(74) Vertreter: **Scheidegger, Zwicky, Werner & Co.**
**Stampfenbachstrasse 48 Postfach**
**CH-8023 Zürich(CH)**

(54) **Schrittschaltwerk.**

(57) Eine Schlingfeder-Kupplungs- und Bremsvorrichtung (a) weist eine Antriebsnabe (1) und eine Antriebsnabe (5) auf, die kraftschlüssig durch eine Schlingfeder (8) verbunden sind, die mit Verspannung auf dem Umfang der Antriebsnabe (1) und der Antriebsnabe (5) liegt. Der aus einer Scheibe (30) und zwei um 180° versetzt angeordneten Treilbrollen (31, 32) bestehende Treiber eines Malteserkreuzgetriebes (B) wird durch die mit der Scheibe (30) fest verbundene Antriebsnabe (5) der Schlingfeder-Kupplungs- und Bremsvorrichtung (A) intermittierend angetrieben. Von dem ständig mit der Teilscheibe (34) des Malteserkreuzgetriebes (B) in Eingriff stehenden Treiber (30, 31, 32) erteilt abwechselnd die eine Treibrolle (31) und die andere Treibrolle (32) durch Eingriff in einen Schlitz (36) der Teilscheibe (34) dieser eine Drehung um eine Teilung. Nach jeder halben Umdrehung der Abtriebsnabe (5) wird durch eine über Nocken betätigte Schalthülse (10) die Vorspannung der Schlingfeder (8) aufgehoben und die reibschlüssige Verbindung zwischen Antriebsnabe (1) und Abtriebsnabe (5) gelöst. In dieser Halteposition befindet sich jede der beiden Teibrollen (31, 32) in einem von zwei benachbarten Schlitzen (36) der Teilscheibe (34), wodurch die Teilscheibe gesperrt ist. Die am Ende kreisbogenförmig erweiterten Schlitze (36) der Teilscheibe (34) ermöglichen die Bewegung der Treibrollen (31, 32) innerhalb der Schlitze über einen bestimmten Winkel ohne Drehwirkung auf die Teilscheibe (34), sodass Halteungenauigkeiten der Abtriebsnabe (5) unschädlich sind. Das Schrittschaltwerk ermöglicht bis zu 25'000 Schaltungen pro Stunde.

Fig.1

1

# Schrittschaltwerk

Die Erfindung betrifft ein Schrittschaltwerk mit einem eine Teilscheibe und einen mit dieser zusammenwirkenden Treiber aufweisenden Malteserkreuzgetriebe.

Ein Schrittschaltwerk dieser Art dient in bevorzugter Anwendung für periodisch durchzuführende Schaltungen an Verarbeitungsmaschinen oder lässt sich beispielsweise für einen Rundschalttisch verwenden, weil das Malteserkreuz sehr einfach mit einem Drehteller verbunden werden kann. Bei Rundschalttischen werden auch häufig Zahnkränze oder Kugelkränze für die Verriegelung verwendet. Mit den bekannten Rundschalttischen lässt sich jedoch nur eine Schalthäufigkeit von 6000 bis maximal 12000 Schaltungen pro Stunde erzielen. Bestimmte Arbeitsvorgänge wie beispielsweise Endkontrolle durch Messen lassen sich jedoch auch schneller durchführen, sodass mit einer höheren Schalthäufigkeit eine Produktivitätssteigerung erzielbar wäre.

Die der vorliegenden Erfindung zugrunde liegende Aufgabe bestand daher darin, ein Schrittschaltwerk zur Erzielung einer wesentlich höheren Schalthäufigkeit zu schaffen, das bei Verwendung bekannter Elemente sich durch die Einfachheit der Konstruktion auszeichnet. Zur Lösung dieser Aufgabe weist das Schrittschaltwerk die Merkmale gemäss Anspruch 1 auf. Mit der Kombination eines Malteserkreuzgetriebes mit einer Schlingfeder-Kupplungs- und Bremsvorrichtung lässt sich eine Schalthäufigkeit von 25'000 Schaltungen pro Stunde erzielen, was mit mechanischen Mitteln bisher unerreichbar war. Voraussetzung dafür ist, dass das Malteserkreuzgetriebe und die Schlingfeder-Kupplungs- und Bremsvorrichtung so gekuppelt sind, dass die Toleranz der Haltegenauigkeit der Schlingfeder-Kupplungs- und Bremsvorrichtung und die zwischen dieser und dem Malteserkreuzgetriebe wirkenden dynamischen Kräfte sich nicht negativ auf die Schaltgenauigkeit auswirken können.

Ein Ausführungsbeispiel eines Schrittschaltwerks wird nachfolgend anhand der Zeichnungen näher erläutert. Es zeigen:

Fig. 1    einen Axialschnitt durch das Schrittschaltwerk;

Fig. 2    einen horizontalen Teilschnitt durch das Malteserkreuzgetriebe gemäss Linie II-II in Fig. 1 mit Draufsicht auf die Teilscheibe und den mit dieser zusammenwirkenden Treiber, in grösserem Massstab und ein anderes Grössenverhältnis zwischen Treiber und Teilscheibe zeigend;

Fig. 3    einen Querschnitt durch die Schlingfeder-Kupplungs- und Bremsvorrichtung gemäss der Linie III-III;

Fig. 4    einen Teilschnitt gemäss der Linie IV-IV in Fig. 3.

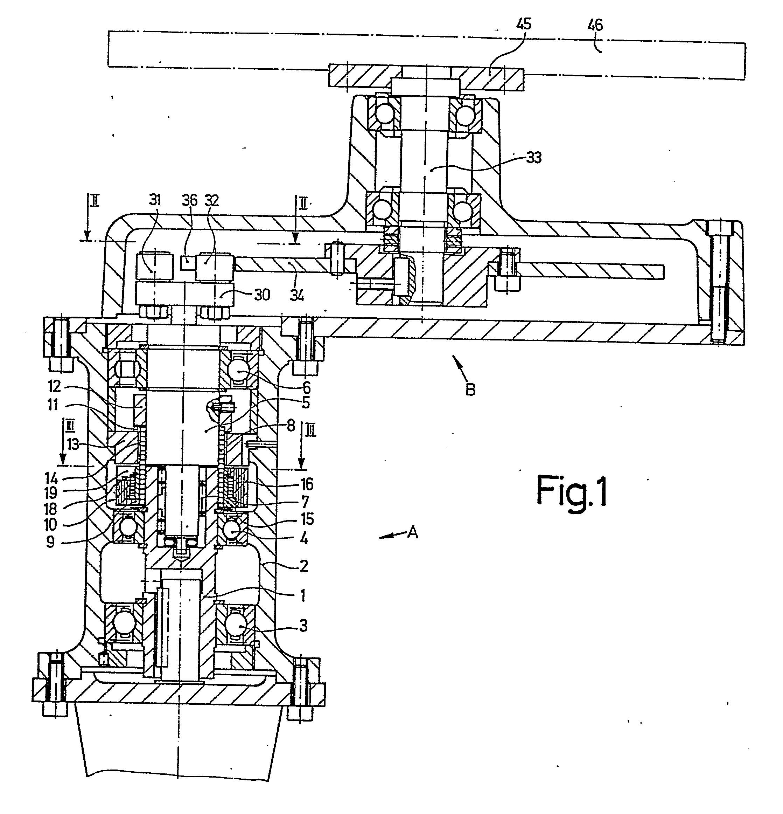

Das in Fig. 1 dagestellte Schrittschaltwerk umfasst eine Schlingfeder-Kupplungs- und Bremsvorrichtung A und ein Malteserkreuzgetriebe B, die zusammenwirken. Die Schlingfeder-Kupplungs- und Bremsvorrichtung weist eine Antriebsnabe 1 auf, die in einem im wesentlichen zylindrischen Gehäuse 2 mittels zweier im achsialen Abstand voneinander angeordneter Wälzlager 3 und 4 gelagert ist. Die Abtriebsnabe 5 ist an dem einen Ende mittels eines Wälzlagers 6 in dem Gehäuse 2 gelagert und das andere abgesetzte Ende der Abtriebsnabe ist mittels eines Nadellagers 7 in der Antriebsnabe 1 gelagert. Das Wälzlager 6 ist als Rücklaufsperre ausgebildet.

Die kraftschlüssige Verbindung zwischen der Antriebsnabe 1 und der Abtriebsnabe 5 ist durch eine Schlingfeder 8 hergestellt, deren antriebseitiges Ende 9 radial nach aussen abgebogen ist und formschlüssig in die die Schlingfeder umschliessende Schalthülse 10 eingreift. Das abtriebseitige Ende 11 der Schlingfeder 8 ist ebenfalls radial nach aussen abgebogen und formschlüssig in einem Haltring 12 festgehalten. Zwischen diesem Haltering 12 und der Schalthülse 10 ist ein Bremsring 13 derart angeordnet, dass er einerseits im Gehäuse 2 gegen Verdrehung gesichert ist und andererseits zum Aussendurchmesser der Schlingfeder 8 ein Spiel 14 von ca. 0,2 bis 0,3 mm sicherstellt. Der Innendurchmesser der Schlingfeder 8 ist kleiner als der Durchmesser der Antriebsnabe 1 und der Abtriebsnabe 5, sodass die Schlingfeder mit Vorspannung auf der Antriebsnabe 1 und der Abtriebsnabe 5 liegt und diese reibschlüssig verbindet.

Die Schalthülse 10 besteht besteht aus zwei konzentrisch ineinander angeordneten Ringen 15 und 16 und einer dazwischen angeordneten weiteren Schlingfeder 17, die mit viel Vorspannung auf dem inneren Ring 15 montiert ist und deren eines Ende 18 radial nach aussen abgebogen ist und in einer Nut 19 im äusseren Ring 16 gehalten ist. Im inneren Ring 15 greift das Ende 9 der Schlingfeder 8 ein. Die weitere Schlingfeder 17 zwischen den beiden Ringen 15 und 16 der Schalthülse 10 erlaubt eine Verdrehung des äusseren Ringes 16 in der Antriebsdrehrichtung der Kupplung, während in der entgegengesetzten Drehrichtung der äussere Ring durch reibungschlüssige Kupplung mit dem inneren Ring 15 blockiert ist.

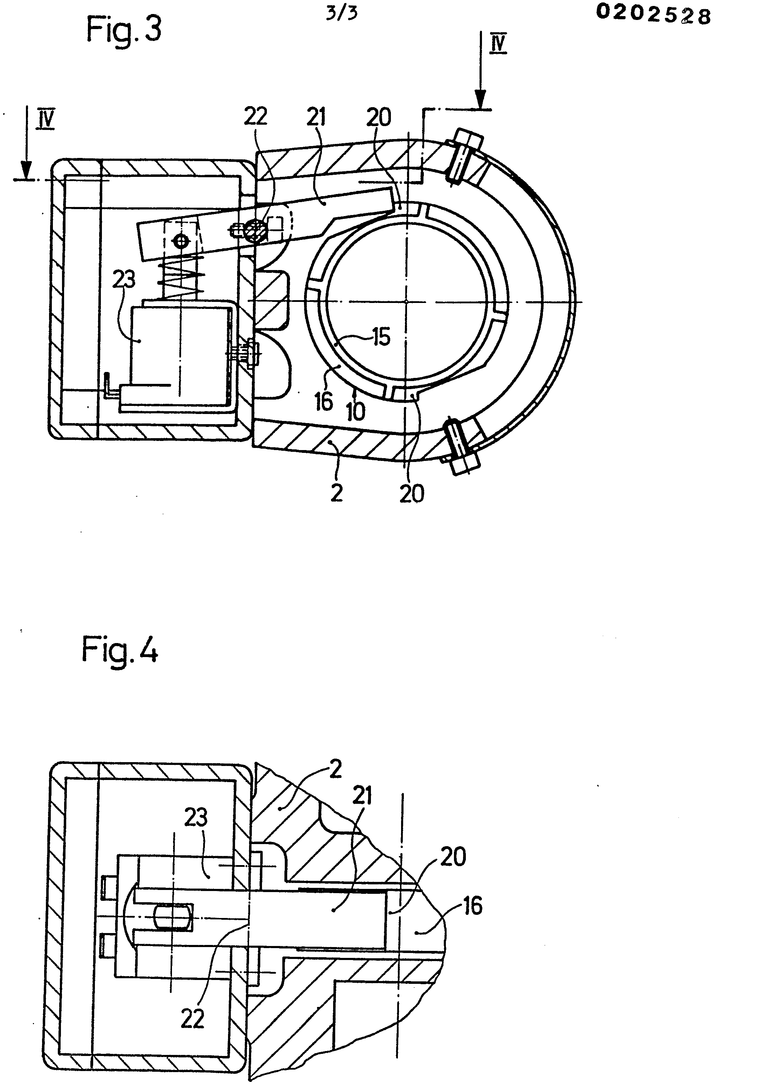

Aus dem in Fig. 3 in grösserem Massstab dargestellten Querschnitt geht hervor, dass der äussere Ring 16 am Aussenumfang 2 um 180° zueinander versetzt angeordnete Nocken 20 aufweist. Wenn die aus den beiden Ringen 15 und 16 bestehende Schalthülse 10 sich dreht, läuft der Nocken 20 gegen einen
in seine Umlaufbahn geschwenkten Auslösehebel 21, der um eine
am Gehäuse 2 befestigte Schwenkachse 22 schwenkbar ist und
dessen anderes Ende durch einen Hubmagneten 23 betätigt wird,
der in dem Gehäuse 2 fest angeordnet ist.

Die aus einem inneren Ring 15 und einem äusseren Ring 16 sowie der zwischen diesen angeordneten weiteren Schlingfeder 17
bestehende Schalthülse 10 gestattet nun, dass man die Stellung
der am äusseren Ring 16 angeordneten Nocken 20 stufenlos verändern kann. In der Antriebsdrehrichtung der Schlingfeder-
Kupplung- und Bremsvorrichtung gemäss Fig. 3 im Gegenuhrzeigersinn lässt sich der äussere Ring beliebig verdrehen, während
aufgrund der Windungsrichtung der weiteren Schlingfeder 17
beim Auftreffen des Nockens 20 gegen den Auslösehebel 21 die
weitere Schlingfeder 17 sperrt.

Die Antriebsnabe 1 und die Abtriebsnabe 5 sind durch die
Schlingfeder 8 reibschlüssig verbunden, solange der Auslösehebel 21 gemäss Fig. 3 aus der Umlaufbahn der Schalthülse 10
herausgeschwenkt ist. Wenn nun der Auslösehebel 21 auf den
Nocken 20 der sich drehenden Schalthülse 10 auftrifft, wird
die Vorspannung der Schlingfeder 8 aufgehoben und der Reibschluss zwischen Antrieb und Abtrieb gelöst. Das Drehmoment
der angetriebenen Masse dreht nun den Abtrieb mit dem fest
verbundenen anderen Ende 11 der Schlingfeder 8 noch weiter,
bis die Schlingfeder 8 mit ihrem Aussendurchmesser den Bremsring 13 berührt und dadurch gestoppt wird. Im nun geöffneten
Zustand der Schlingfeder 8 verhindert die Rücklaufsperre im
Wälzlager 6 ein Zurückdrehen der Abtriebsnabe 5, was - hervorgerufen durch das Oeffnungsmoment der Schlingfeder 8 - ein
Einkuppeln zur Folge hätte.

Wenn anschliessend der Auslösehebel 21 durch den Hubmagneten 23

vom Nocken 20 durch Schwenkbewegung um die Drehachse 22 wieder getrennt wird, schliesst sich die Schlingfeder 8 wieder um die Antriebsnabe 1 und die Abtriebsnabe 5, sodass Abtrieb und Antrieb wieder kraftschlüssig verbunden sind. Da zwei Nocken 20 vorhanden sind, erfolgt dieser Vorgang zweimal pro Umdrehung.

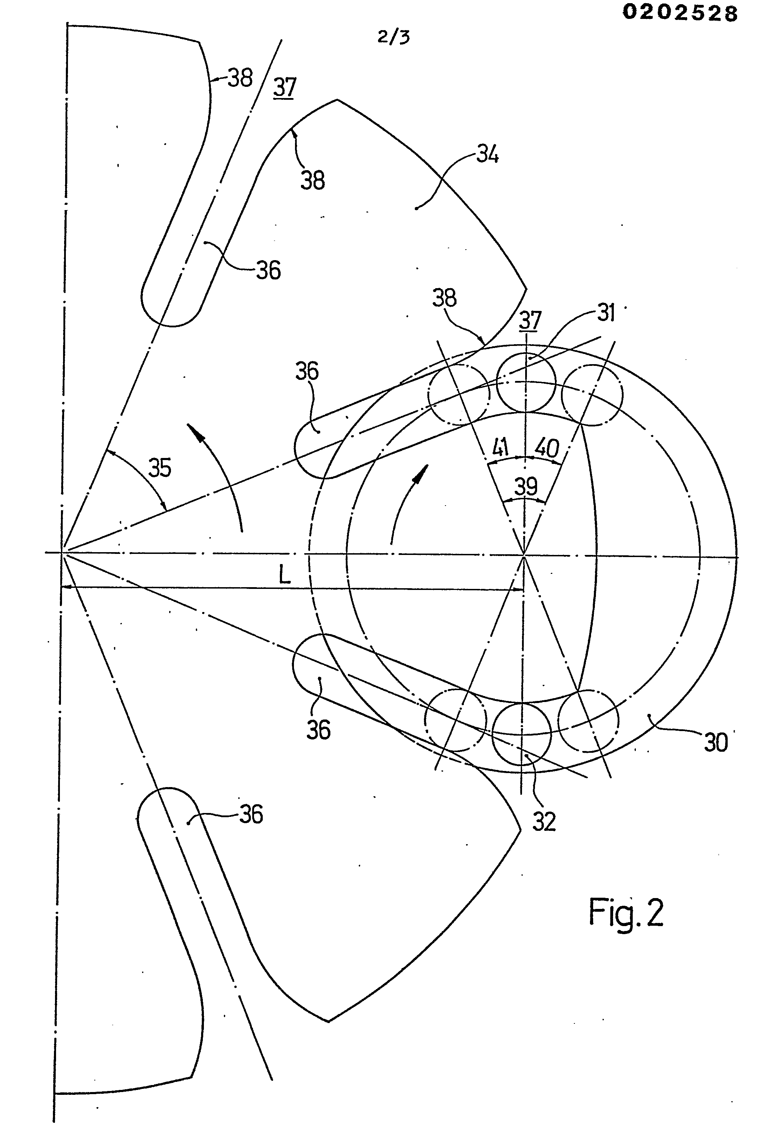

Die Abtriebsnabe 5 der Schlingfeder-Kupplungs- und Bremsvorrichtung trägt am oberen Ende eine fest angeordnete Scheibe 30, auf der einander gegenüber, d.h. um 180° versetzt zwei Treibrollen 31 und 32 mit ihren Drehachsen parallel zur Achse der Abtriebsnabe angeordnet sind. Die Scheibe 30 und die beiden Treibrollen 31 und 32 bilden den Treiber des Malteserkreuzgetriebes B, welches eine mit einer Drehachse 33 drehfest verbundene Teilscheibe 34 aufweist, mit welcher der Treiber 30, 31, 32 zusammenwirkt. Die Wirkungsweise geht aus der Darstellung im grösseren Massstab gemäss Fig. 2 deutlicher hervor. Die Teilscheibe 34 weist in regelmässigen Winkelabständen entsprechend dem Teilungswinkel 35 der Teilscheibe radial verlaufende Schlitze 36 zum Zusammenwirken mit den identischen Treibrollen 31 und 32 auf. Zur Verdeutlichung der Darstellung weist die in Fig. 2 hälftig dargestellte Teilscheibe 34 nur acht Schlitze 36 auf und stimmt dieses dargestellte Beispiel nicht mit den geometrischen Abmessungen in Fig. 1 überein, während die Anzahl der Teilungen in der praktischen Ausführung wesentlich grösser sein kann.

Der Achsabstand L zwischen dem aus der Scheibe 30 und den Treibrollen 31 und 32 bestehenden Treiber und der Teilscheibe 34 des Malteserkreuzgetriebes ist kleiner als der Radius der Teilscheibe 34. Bei dieser Konstruktion ist von den vorhandenen beiden Treibrollen 31 und 32 immer mindestens eine in Eingriff mit der Teilscheibe 34. In der Halteposition des Treibers, die in Fig. 2 durch die beiden mit ausgezogenen Linien dargestellten Treibrollen 31 und 32 verdeutlicht ist, und links und rechts von dieser Position, dargestellt durch die strichpunktierten, die Treibrollen darstellenden Kreise, stehen beide Treibrollen 31 und 32 gleichzeitig mit der Teilscheibe 34 in Eingriff. Die Schlingfeder-Kupplungs- und Bremsvorrichtung A treibt die Scheibe 30 mit den beiden Treibrollen 31 und 32 intermittierend an, wobei die Scheibe immer eine halbe Umdrehung macht und die Teilscheibe 34 um eine Teilung weitergedreht wird. Der Treiber muss in der gebremsten Stellung, d.h. in der in Fig. 2 mit ausgezogenen Linien dargestellten Stellung der Treibrollen 31, 32 in ihrer Halteposition, genau eingestellt werden können, und zu diesem Zweck dient die zweigeteilte Schalthülse 10, die wie vorstehend beschrieben gestattet, die Nocken 20 gegenüber der Position der Treibrollen 31 und 32 zu verstellen. Damit ist es möglich, den intermittierenden Antrieb durch die Schlingfeder-Kupplungs- und Bremsvorrichtung so zu stoppen, dass die beiden Treibrollen 31 und 32 in der Halteposition gemäss Fig. 2 stehen. In der Halteposition ist die Teilscheibe 34 durch die beiden Treibrollen 31 und 32 spielfrei gesperrt. Ein von aussen angreifendes Drehmoment auf die Teilscheibe überträgt sich nicht auf die Schlingfeder-Kupplungs- und Bremsvorrichtung bzw. erzeugt auf die Abtriebsnabe 5 derselben lediglich ein Biegemoment.

Die radial äussere Endzone 37 jedes Schlitzes 36 der Teilscheibe 34 weist kreisbogenförmig ausgebildete Schlitzränder 38 auf, mit denen die auf einer Kreisbahn bewegten Treibrollen 31 und 32 zusammenwirken. Der im Achsabstand L von der Mittelachse der Teilscheibe 34 befindliche Mittelpunkt des Kreisbogens des Schlitzrandes 38 liegt in der Halteposition der die Treibrollen 31 und 32 tragenden Scheibe 30 auf deren Mittelachse. Der kreisbogenförmige Schlitz-rand 38 erstreckt sich zwischen den beiden Stellungen der Treibrollen 31 bzw. 32 die in Fig. 2 durch strichpunktierte
Kreise dargestellt sind. Der zu diesem Kreisbogen gehörende
Zentriwinkel entspricht einem Rastwinkel, denn während eine
Treibrolle diesen Winkel durchläuft, erfolgt keine Weiterdrehung der Teilscheibe 34, obwohl die Treibrolle sich in
dem Schlitz 36 befindet.

Beim Einkupplungsvorgang der Schlingfeder-Kupplungs- und
Bremsvorrichtung entsteht ein Beschleunigungswinkel 40, der
bei richtiger Wahl der Drehzahl des Treibers bzw. der Antriebsnabe der Schlingfeder-Kupplungs- und Bremsvorrichtung
so klein ist, dass die Teilscheibe 34 noch nicht gedreht wird.
Auf diese Weise ist es möglich, die Beschleunigungskräfte
bezüglich der Schlingfeder-Kupplungs- und Bremsvorrichtung
und des Malterserkreuzgetriebes zeitlich zu staffeln, was
eine wesentliche Reduktion der dynamischen Belastung der
Schlingfeder-Kupplungs- und Bremsvorrichtung zur Folge hat.
In entsprechenderweise ergibt sich bei jedem Anhalten des
aus der Scheibe 30 und den Treibrollen 31 und 32 bestehenden
Treibers ein Verzögerungswinkel 41 zwischen der durch den
strichpunktierten Kreis dargestellten Stellung der Treibrolle,
bei welcher Stellung der Nocken 20 und der Auslösehebel 21
in Kontakt kommen, und der in Fig. 2 rechts davon mit einem
geschlossenen Kreis dargestellten Stellung der Treibrolle in
der Halteposition. Die Scheibe 30 des Treibers dreht sich gemäss Pfeilrichtung im Gegenuhrzeigersinn. Beim Abbremsen des
Treibers dreht sich die Teilscheibe 34 nicht mehr um ihre
Achse, sodass nurmehr der Treiber selbst abgebremst werden
muss, womit sich die gleichen Vorteile wie bei der Beschleunigung hinsichtlich des zeitlich gestaffelten Auftretens der
Kräfte ergeben. Schliesslich erlaubt diese besondere Ausführungsform eines Malteserkreuzgetriebes auch, die in der
Grössenordnung von $1^o$ bis $2^o$ Drehwinkel auftretenden Toleranzen der Haltegenauigkeit der Schlingfeder-Kupplungs- und Bremsvorrichtung aufzufangen. Allgemein kann man sagen, dass
die Toleranz der Haltegenauigkeit addiert zum Beschleunigungswinkel 40 bzw. addiert zum Verzögerungswinkel 41 kleiner ist,
als der sich aus der Teilung ergebende Teilungswinkel 35.
Dieser ist gleich gross wie der Rastwinkel 39, weil die
beiden Radien, die diesen Winkel einschliessen, senkrecht
auf den Mittellinien der beiden benachbarten Schlitze 36
der Teilscheibe 34 stehen.

An der Drehachse 33 des Malteserkreuzgetriebes ist ein
Flansch 45 befestigt und auf diesem kann je nach Bedarf eine
Platte 46 oder ein Rundtisch angebracht werden, der für den
Anwendungsfall geeignet ist.

1

<u>P a t e n t a n s p r ü c h e</u>

1. Schrittschaltwerk mit einem eine Teilscheibe und einen mit dieser zusammenwirkenden Treiber aufweisenden Malteserkreuzgetriebe, dadurch gekennzeichnet, dass der Treiber (30, 31, 32) ständig mit der Teilscheibe (34) des Malteserkreuzgetriebes (B) in Eingriff steht und durch eine Schrittschaltantriebsvorrichtung (A) intermittierend angetrieben ist, deren mit dem Treiber (30, 31, 32) verbundene Abtriebsnabe (5) periodisch in einer Stellung stillsetzbar ist, in der der jeweils innerhalb eines Rastwinkels (39) befindliche Treiber (30, 31, 32) die Teilscheibe (34) des Malteserkreuzgetriebes (B) sperrt.

2. Schrittschaltwerk nach Anspruch 1, dadurch gekennzeichnet, dass die Schrittschaltantriebsvorrichtung eine Schlingfeder-Kupplungs- und Bremsvorrichtung (A) aufweist.

3. Schrittschaltwerk nach Anspruch 2, dadurch gekennzeichnet, dass der Treiber zwei auf einer mit der Abtriebsnabe (5) der Schlingfeder-Kupplungs- und Bremsvorrichtung (A) verbundenen Scheibe (30) um 180° versetzt und zur Abtriebsnabe achsparallel angeordnete Treibrollen (31, 32) aufweist, die in der durch Stillsetzen erreichten Halteposition gleichzeitig mit benachbarten Schlitzen (36) der Teilscheibe (34) des Malteserkreuzgetriebes (B) in Eingriff stehen.

4. Schrittschaltwerk nach Anspruch 3, dadurch gekennzeichnet, dass der Achsabstand (L) zwischen dem Treiber (30, 31, 32) und der Teilscheibe (34) des Malteserkreuzgetriebes (B) mit Aussenschaltung kleiner als der Radius der Teilscheibe (34) ist und die radial äussere Endzone (37) jedes der Schlitze (36) der Teilscheibe (34) kreisbogenförmig ausgebildete Schlitzränder (38) zum Zusammenwirken mit den auf einer Kreisbahn bewegten Treibrollen (31, 32) aufweist, wobei der im Achsabstand (L) von der Mittelachse der Teilscheibe (34) befindliche Mittelpunkt des Kreisbogens des Schlitzrandes (38) in der Halteposition der die Treibrollen (31, 32) tragenden Scheibe (30) auf deren Mittelachse liegt und der dem Kreisbogen (38) entsprechende Zentriwinkel den Rastwinkel (39) bildet, innerhalb welchem jede der relativ zu einem Schlitz (36) bewegten Treibrollen (31, 32) keine Drehung der Teilscheibe (34) verursachen und beide Treibrollen die Teilscheibe (34) in beiden Drehrichtungen sperren.

5. Schrittschaltwerk nach Anspruch 4, dadurch gekennzeichnet, dass der Rastwinkel (39) gleich gross wie der Teilungswinkel (35) der Teilscheibe (34) ist und dem Kreisbogen zwischen zwei Radien der die Treibrollen (31, 32) tragenden Scheibe (30) entspricht, welche Radien in der Halteposition der Scheibe (30) senkrecht zu den Schlitzmittellinien benachbarter Schlitze (36) der Teilscheibe (34) verlaufen.

6. Schrittschaltwerk nach Anspruch 2, dadurch gekennzeichnet, dass die Schlingfeder-Kupplungs- und Bremsvorrichtung (A) eine mit dem einen Ende (9) der Schlingfeder (8) in Verbindung stehende Schalthülse (10) mit zwei an deren Umfang um 180° versetzt angeordneten Schaltnocken (20) aufweist, deren Drehstellung relativ zu der mit dem Treiber (30, 31, 32) verbundenen Abtriebsnabe (5) stufenlos einstellbar ist und in deren Umlaufbahn das Ende eines schwenkbeweglich am Gehäuse (2) der Kupplungs- und Bremsvorrichtung (A) gelagerten Auslösehebels (21) bewegbar ist, um durch Zusammenwirken des Auslösehebels (21) und der Schalthülse (10) die Abtriebsnabe (5) pro Umdrehung zweimal stillzusetzen.

7. Schrittschaltwerk nach Anspruch 6, dadurch gekennzeichnet, dass eine zweigeteilte Schalthülse (10) zwischen einem inneren Ring (15), an welchem das eine Federende (9) der Schlingfeder (8) der Schlingfeder-Kupplungs- und Bremsvorrichtung (A) formschlüssig festgehalten ist, und einem die Nocken (20) am Umfang aufweisenden äusseren Ring (16)
eine weitere Schlingfeder (17) aufweist, deren eines Ende
mit dem äusseren Ring (16) formschlüssig verbunden ist und
welche weitere Schlingfeder (17) bei Verdrehung des äusseren Rings (16) in der Antriebsdrehrichtung der Schlingfeder-
Kupplungs- und Bremsvorrichtung (A) zwecks Veränderung der
Nockendrehstellung relativ zur Abtriebsnabe (5) auf dem
inneren Ring (15) freiläuft und bei am Nocken (20) festgehaltenem äusserem Ring (16) den äusseren Ring (16) mit dem
inneren Ring (15) reibungsschlüssig kuppelt, um die Schlingfeder-Kupplungs- und Bremsvorrichtung (A) ein- und auszukuppeln.

0202528

Fig.1

0202528

Fig.2

0202528

Fig. 3

Fig. 4